# EUROPEAN PATENT APPLICATION

(11) **EP 4 625 788 A1**
(43) Date of publication of application: **01.10.2025**
(21) Application number: 25162862.4
(22) Date of filing: 11.03.2025
(51) Int. Cl.: H02M 1/00, H02M 1/32, H02M 1/36, H02M 3/158

(54) **CURRENT LIMITING SYSTEMS AND ASSOCIATED METHODS**

(30) Priority: 25.03.2024 US 202418615680
(71) Applicant: Analog Devices International Unlimited Company, Limerick (IE)
(72) Inventor: Masini, Marco, Co. Limerick (IE); Georges, Jeremy, Wilmington 01887 (US); Di Cera, Manuel, Co. Limerick (IE); Consoli, Elio, Co. Limerick (IE); Belluco, Gianluca, Co. Limerick (IE); Porcelli, Ivan, Co. Limerick (IE); Patti, Giuseppe, Co. Limerick (IE); Mazzone, Angelo, Co. Limerick (IE); Mita, Rosario, Co. Limerick (IE); Melis, Daniel, Co. Limerick (IE); Christo, Forrest, Wilmington 01887 (US)
(74) Representative: Horler, Philip John

(57) **Abstract**

A current limiting system for a direct-current-to-direct-current (DC-to-DC) converter includes a current generator, voltage control circuitry, and a filter capacitor. The current generator is electrically coupled between an energy source node and a converter input power node, and the current generator is configured to limit a magnitude of a direct current (DC) component of current flowing through the current generator to a predetermined maximum value and to attenuate one or more alternating current (AC) components of current flowing through the current generator. The voltage control circuitry is electrically coupled to the current generator and is configured to generate a control signal for controlling operation of the DC-to-DC converter to regulate a magnitude of a voltage across the current generator. The filter capacitor is electrically coupled between the converter input power node and a reference node.

## Description

### CROSS-REFERENCE TO RELATED APPLICATIONS

This Application for Patent claims priority to U.S. Non-provisional Application No. 18/615,680, filed March 25, 2024, titled, "CURRENT LIMITING SYSTEMS AND ASSOCIATED METHODS", which is hereby expressly incorporated by reference herein for all purposes.

### BACKGROUND

Batteries are commonly used to provide power to electronic devices, such as mobile electronic devices. It is frequently desirable that a mobile electronic device have a small form factor. As such, batteries in mobile electronic devices often need to have a small form factor.

### BRIEF DESCRIPTION OF THE DRAWINGS

FIG. 1 is a schematic diagram of an electrical assembly including a current limiting system, according to an embodiment.
FIG. 2 is a schematic diagram of an embodiment of the FIG. 1 electrical assembly where an electric energy source is embodied by a battery.
FIG. 3 is a schematic diagram of one embodiment of a current generator of the FIG. 1 current limiting system.
FIG. 4 is a schematic diagram of one embodiment of the FIG. 3 current generator.
FIG. 5 is a schematic diagram of one embodiment of the FIG. 4 current generator.
FIG. 6 is a schematic diagram of an embodiment of the FIG. 1 electrical assembly where voltage control circuitry of the current limiting system includes a comparator and a reference voltage source.
FIG. 7 is a flow chart of a method for regulating a voltage across the current generator of the current limiting system of the FIG. 6 electrical assembly when a direct-current-to-direct-current (DC-to-DC) converter of the FIG. 6 electrical assembly operates in a discontinuous conduction mode, according to an embodiment.
FIG. 8 includes three graphs illustrating an example of how the voltage control circuitry and the DC-to-DC converter of the FIG. 6 electrical assembly may cooperate to regulate voltage across the current generator of the electrical assembly when the DC-to-DC converter operates in a discontinuous conduction mode.
FIG. 9 is a schematic diagram of an embodiment of a DC-to-DC converter of the FIG. 1 electrical assembly.
FIG. 10 is a schematic diagram of an alternate embodiment of the FIG. 1 electrical assembly that is further configured to disable a current generator in response to a magnitude of a voltage across the current generator falling to a predetermined minimum value.
FIG. 11 is a state diagram illustrating two possible operating states of the FIG. 10 electrical assembly, according to an embodiment.
FIG. 12 is a schematic diagram of an embodiment of the FIG. 10 electrical assembly where operation control circuitry of the current limiting system includes a comparator and a reference voltage source.

### DETAILED DESCRIPTION OF THE EMBODIMENTS

Batteries having a small form factor, such as micro-batteries, may be used in sizesensitive applications, such as in wearable electronic device applications and in Internet of Things (IoT) applications. Examples of batteries that may have a small form factor include, but are not limited to, silver oxide batteries, lithium thionyl chloride batteries, lithium manganese dioxide batteries, and zinc air batteries. Batteries having a small form factor can be easily damaged when subjected to high current. For example, a battery having a small form factor may have a maximum safe current rating of around only one milliampere (mA) direct current (DC).

Electronic devices commonly include one or more direct-current-to-direct-current (DC-to-DC) converters to convert electrical power from a battery to a form suitable for use in powering a load. For example, a DC-to-DC converter in an electronic device may increase magnitude of voltage provided by a battery to a value that its suitable for powering a load of the electronic device. A DC-to-DC converter powered by a battery may draw current from the battery having large peak values, even if magnitude of an output current of the DC-to-DC converter is small, and the peak values may be particularly large if the DC-to-DC converter is operating in a discontinuous conduction mode (DCM). For example, a DC-to-DC converter operating in a discontinuous conduction mode may draw currents having peak values in the hundreds of milliamperes range even when magnitude of average output current of the DC-to-DC converter is low, such as one milliampere. Such large peak values of current may damage the battery, particularly if the battery is a small form factor battery with a small maximum current rating.

A battery may be at least somewhat protected from large peak values of current drawn by a DC-to-DC converter by use of a capacitor electrically coupled between the battery and the DC-to-DC converter. However, the capacitor must have a large capacitance value to significantly protect the battery from large peak values of current. Capacitors having large capacitance values are generally also physically large, which may make them unsuitable for spaceconstrained applications, such as in mobile electronic devices having a small form factor. Therefore, it is frequently not feasible to protect a battery from large peak values of current solely by use of a capacitor, in a small form factor device application.

Another possible approach to reducing magnitude of current drawn by a DC-to-DC converter from a battery is to configure the DC-to-DC to limit the average magnitude of its input current, such as by controlling switching of one or more switching devices of the DC-to-DC converter to limit average magnitude of the input current. This approach, however, does not eliminate large peak values of the input current drawn by the DC-to-DC converter from the battery.

An additional possible approach to reducing magnitude of current drawn by a DC-to-DC converter from a battery is (i) to include a sensing resistor electrically coupled between the battery and the DC-to-DC converter and (ii) control the DC-to-DC converter based on voltage drop across the resistor to help reduce peak values of the input current. However, this approach requires that the resistor have a high resistance value to be effective at reducing peak current magnitude, and a large resistance value results in significant power dissipation in the resistor and corresponding low efficiency of an electrical assembly including the resistor.

Disclosed herein are new current limiting systems for DC-to-DC converters which at least partially overcome the problems discussed above. The new current limiting systems may be electrically coupled between a battery and a DC-to-DC converter to protect the battery from large peak values of current drawn by the DC-to-DC converter from the battery. The new current limiting systems advantageously use a current generator to limit magnitude of current flowing from a battery to a DC-to-DC converter, thereby potentially achieving significantly lower power loss and corresponding higher efficiency than can be realized by use of a resistor between the battery and the DC-to-DC converter. Additionally, particular embodiments can achieve significantly higher reduction in peak magnitude of current flowing between a battery and a DC-to-DC converter than is practical when using a resistor. Furthermore, some embodiments are capable of obtaining high output impedance of the current generator, thereby promoting small ripple current magnitude, even when using a relatively small power transistor in the current generator, by use of high-gain and high-bandwidth closed-loop control of the power transistor. Moreover, certain embodiments are configured to control magnitude of voltage across the current generator using a single comparator stage, thereby promoting low cost and small size of the current limiting systems. Additionally, particular embodiments of the current limiting systems are configured to shut down when not needed, to avoid potential overshoot during operation under light load conditions and to promote efficiency under light load conditions.

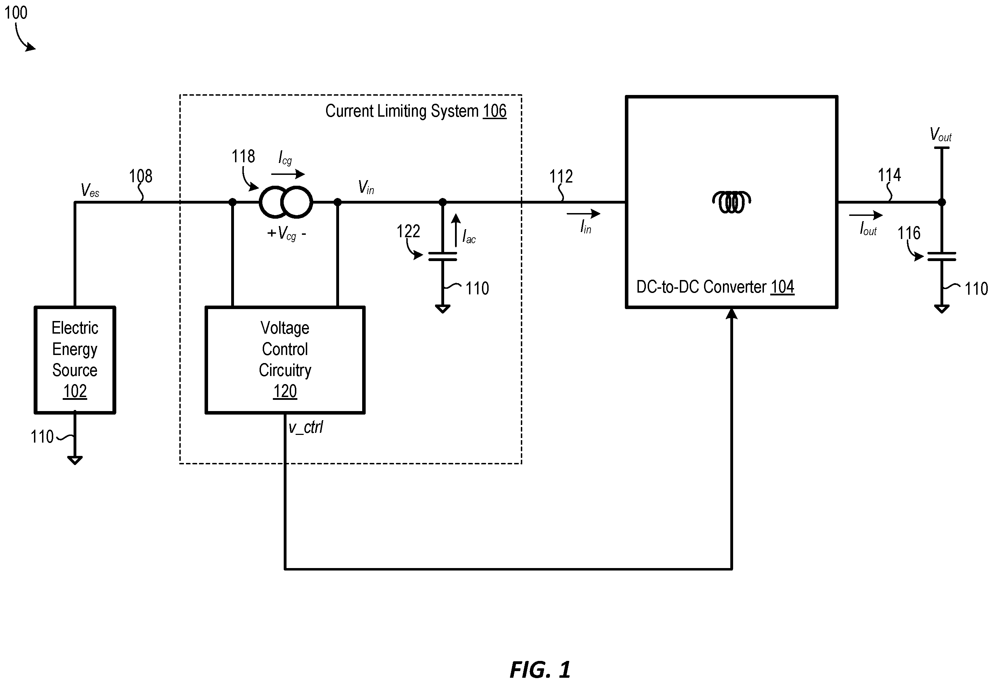

FIG. 1 is a schematic diagram of an electrical assembly 100 including an electric energy source 102, a DC-to-DC converter 104, and a current limiting system 106, where current limiting system 106 is one embodiment of the new current limiting systems disclosed herein. Electric energy source 102 is electrically coupled between an energy source node 108 and a reference node 110. Reference node 110 is depicted as being a ground node, such as an earth ground node or a chassis ground node, in the present figures. It is understood, though, that reference node 110 need not be a ground node, and reference node 110 accordingly could be at a different electrical potential than an earth ground or a chassis ground.

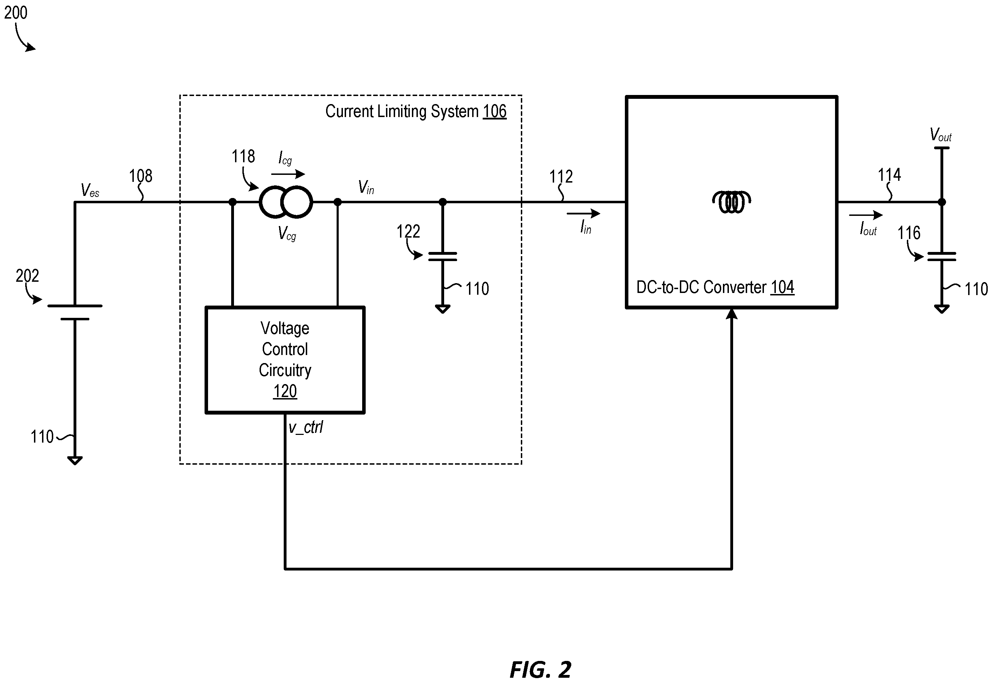

Electric energy source 102 provides a voltage *Vₑₛ* on energy source node 108 with respect to reference node 110. In some embodiments, electric energy source 102 is a battery, or electric energy source 102 includes a battery. For example, FIG. 2 is a schematic diagram of an electrical assembly 200, which is one embodiment of electrical assembly 100 (FIG. 1) where electric energy source 102 is embodied by a battery 202. Referring again to FIG. 1, electric energy source 102 is not limited to being a battery. For example, electric energy source 102 could instead be a photovoltaic device, a thermoelectric generator (TEG), a microgenerator, a super capacitor, etc.

DC-to-DC converter 104 is electrically coupled between a converter input power node 112 and a converter output power node 114. One or more loads (not shown) are optionally electrically coupled to converter output power node 114 for being powered by DC-to-DC converter 104. A tank capacitor 116 is optionally electrically coupled between converter output power node 114 and reference node 110. In certain embodiments, DC-to-DC converter 104 is configured to charge tank capacitor 116 with energy from electric energy source 102, and tank capacitor 116 assists DC-to-DC converter 104 with powering one or more loads electrically coupled to converter output power node 114, such as by helping support peak current requirements of the one or more loads. DC-to-DC converter 104 is configured to convert an input voltage *Vᵢₙ* on converter input power node 112 to an output voltage *Vₒᵤₜ* on converter output power node 114, as well as to convert an input current *Iᵢₙ* flowing into DC-to-DC converter 104 from converter input power node 112 to an output current *Iₒᵤₜ* flowing out of DC-to-DC converter 104 at converter output power node 114. As discussed below, in certain embodiments, DC-to-DC converter 104 has boost topology, a buck topology, or a buck and boost topology.

Current limiting system 106 includes a current generator 118, voltage control circuitry 120, and a filter capacitor 122. Current generator 118 is electrically coupled between energy source node 108 and converter input power node 112, and filter capacitor 122 is electrically coupled between converter input power node 112 and reference node 110. Voltage control circuitry 120 is electrically coupled to current generator 118, and voltage control circuitry 120 is configured to generate a control signal *v_ctrl* for controlling operation of DC-to-DC converter 104 to regulate a magnitude of a voltage *V_{cg}* across current generator 118 to a predetermined value.

Current generator 118 is configured to limit a magnitude of a DC component of a current *I_{cg}* flowing through current generator 118 to a predetermined maximum value, henceforth referred to as *I_{LIMIT}.* Stated differently, current generator 118 prevents the magnitude of the DC component of current *I_{cg}* from exceeding *I_{LIMIT},* although the magnitude of the DC component of current *I_{cg}* could be less than *I_{LIMIT}* under certain conditions, such as if voltage *V_{cg}* across current generator 118 is small (or zero) due to light load conditions. Additionally, output impedance of current generator 118, i.e., resistance to flow of current *I_{cg}* presented by current generator 118, limits magnitude of alternating current (AC) components of current *I_{cg}* by attenuating the AC components. Current *I_{cg}* flowing through current generator 118 is the same current that flows through electric energy source 102, and current limiting system 106 therefore limits magnitude of current flowing through electric energy source 102 by limiting magnitude of current *I_{cg}* flowing through current generator 118. For example, current generator 118 may be configured so that *I_{LIMIT}* is equal to, or less than, a maximum value of current that can be reliably and safely handled by electric energy source 102, thereby preventing damage to electric energy source 102 from high current magnitude. Filter capacitor 122 helps supply AC components of current *Iᵢₙ* flowing into DC-to-DC converter 104, thereby helping minimize magnitude of ripple on voltage *Vᵢₙ* on converter input power node 112.

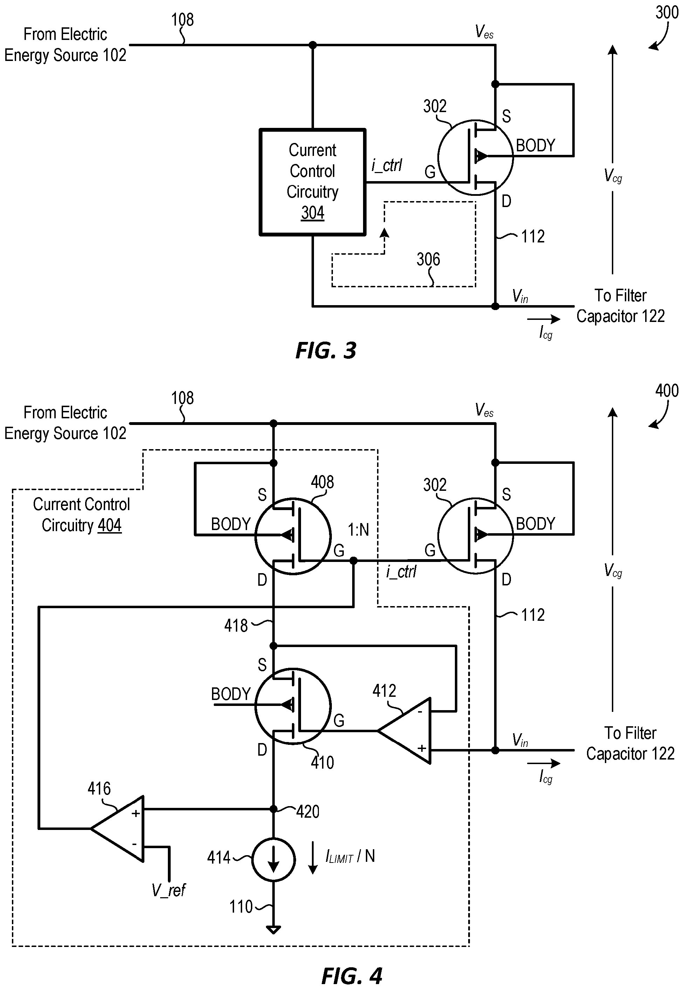

It should be appreciated that current generator 118 relies on control of one or more transistors of current generator 118 (not shown in FIG. 1) to limit magnitude of current *I_{cg},* instead of relying on a resistance value of a resistor, which promotes accurate control of magnitude of current *I_{cg},* as well as low power dissipation in current generator 118. For example, FIG. 3 is a schematic diagram of a current generator 300, which is one possible embodiment of current generator 118, although it is understood that current generator 118 could be embodied in other manners without departing from the scope hereof. Current generator 300 includes a power transistor 302 and current control circuitry 304. Power transistor 302 is electrically coupled between energy source node 108 and converter input power node 112. Specifically, power transistor 302 is an enhancement mode, P-type metal oxide semiconductor field effect transistor (PMOS FET) including a drain (D), a source (S), a gate (G), and a body (BODY). The drain is electrically coupled to converter input power node 112, the source is electrically coupled to energy source node 108, and the body is electrically coupled to the source. Current control circuitry 304 is electrically coupled to energy source node 108, converter input power node 112, and the gate of power transistor 302. Current control circuitry 304 is configured to generate a control signal *i_ctrl* on the gate of power transistor 302 to modulate a source-to-gate voltage of power transistor 302 and thereby limit the DC component of current *I_{cg}* flowing through power transistor 302 to *I_{LIMIT}.* Power transistor 302 could alternately be embodied by a power transistor other than a PMOS FET with appropriate changes to current control circuitry 304.

Voltage *V_{cg}* across current generator 118 should be greater than the overdrive of power transistor 302 to avoid triode of power transistor 302, i.e., voltage *V_{cg}* should be greater than overdrive (Δv) of power transistor 302, where Δv = *V_{sg} - Vₜₕ, V_{sg}* is the source-to-gate voltage of power transistor 302, and *Vₜₕ* is the threshold voltage of power transistor 302. On the other hand, it is desirable for voltage *V_{cg}* to be small to limit power dissipation of in power transistor 302. Thus, it is desirable for Δv to be low to enable *V_{cg}* to also be low. These requirements would necessitate that power transistor 302 be large to support large values of *I_{LIMIT},* but current generator 300 advantageously overcomes this drawback by implementing high-gain and high-bandwidth closed-loop control 306 of power transistor 302, where closed-loop control 306 is symbolically shown by dashed lines in FIG. 3. The high-gain and high-bandwidth closed-loop control 306 of power transistor 302 advantageously enables Δv to be greater than voltage *V_{cg}* because output impedance of power transistor 302 is increased by the loop gain of the closed-loop control 306. The output impedance of power transistor 302 advantageously attenuates AC components of current *I_{cg}* flowing through power transistor 302.

FIG. 4 is a schematic diagram of a current generator 400, which is an embodiment of current generator 300 (FIG. 3) where current control circuitry 304 is embodied by current control circuitry 404. Current control circuitry 404 includes a PMOS FET 408, a PMOS FET 410, an amplifier 412, a current source 414, and an amplifier 416. PMOS FET 408 mirrors power transistor 302 with a mirror ratio of 1:N, such that magnitude of source-to-drain current of power transistor 302 is N times magnitude of source-to-drain current of PMOS FET 408. A source of PMOS FET 408 is electrically coupled to energy source node 108, and a drain of PMOS FET 408 is electrically coupled to a drain node 418. A gate of PMOS FET 408 is electrically coupled to the gate of power transistor 302, and a body of PMOS FET 408 is electrically coupled to the source of PMOS FET 408.

A source of PMOS FET 410 is electrically coupled to drain node 418, and a drain of PMOS FET 410 is electrically coupled to a comparison node 420. Amplifier 412 is configured to amplify a difference between voltage *Vᵢₙ* on converter input power node 112 and a voltage on drain node 418, and an output of amplifier 412 drives a gate of PMOS FET 410. As such, amplifier 412 drives PMOS FET 410 to cause a source-to-drain voltage of PMOS FET 408 to be the same as a source-to-drain voltage of power transistor 302. Current source 414 is electrically coupled between comparison node 420 and reference node 110, and current source 414 is configured to draw current having a magnitude of *I_{LIMIT}*/N away from comparison node 420. Amplifier 416 is configured to amplify a difference between a reference voltage *V_ref* and a voltage on comparison node 420, and an output of amplifier 416 is control signal *i_ctrl* which drives the respective gates of power transistor 302 and PMOS FET 408. As such, amplifier 416 drives each of power transistor 302 and PMOS FET 408 to minimize a difference between (i) source-to-drain current of PMOS FET 408 and (ii) current drawn by current source 414, thereby regulating magnitude of current *I_{cg}* through current generator 400 to *I_{LIMIT},* assuming magnitude of voltage *V_{cg}* is sufficiently large to maintain magnitude of current *I_{cg}* at *I_{LIMIT}.*

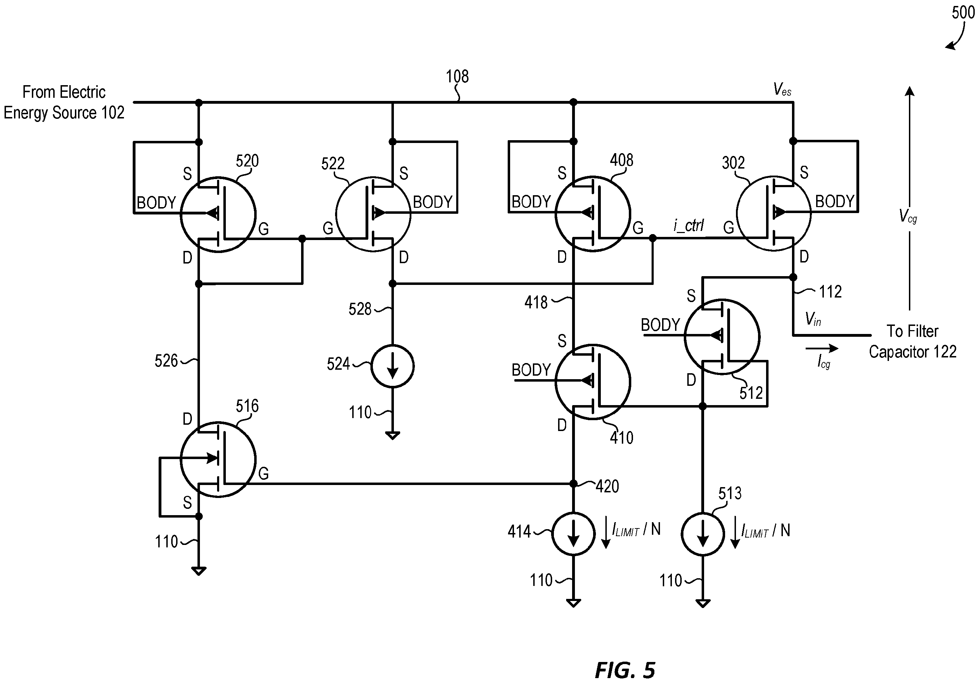

FIG. 5 is a schematic diagram of a current generator 500, which is one embodiment of current generator 400 (FIG. 4) illustrating one possible embodiment of the amplifiers of current generator 400. Amplifier 412 of current generator 400 is collectively embodied by a PMOS FET 512 and a current source 513 in current generator 500. A source of PMOS FET 512 is electrically coupled to converter input power node 112, and each of a drain and a gate of PMOS FET 512 is electrically coupled to the gate of PMOS FET 410. Current source 513 is electrically coupled between the drain of PMOS FET 512 and reference node 110, and current source 513 is configured to pull a source-to-drain current of *I_{LIMIT}*/N through PMOS FET 512.

Amplifier 416 of current generator 400 is collectively embodied by an NMOS FET 516, a PMOS FET 520, a PMOS FET 522, and a current source 524 in current generator 500. A source of PMOS FET 520 is electrically coupled to energy source node 108, and a drain of PMOS FET 520 is electrically coupled to a mirror node 526. A drain of NMOS FET 516 is electrically coupled to mirror node 526, and a source of NMOS FET 516 is electrically coupled to reference node 110. A gate of NMOS FET 516 is electrically coupled to comparison node 420. A gate of PMOS FET 520 and a gate of PMOS FET 522 are each electrically coupled to mirror node 526. As source of PMOS FET 522 is electrically coupled to energy source node 108, and a drain of PMOS FET 522 is electrically coupled to a current control node 528. Current source 524 is electrically coupled between current control node 528 and reference node 110. The respective gates of each of power transistor 302 and PMOS FET 408 are electrically coupled to current control node 528. The gate of NMOS FET 516 is driven according to the difference between source-to-drain current through PMOS FET 408 and current flowing through current source 414. PMOS FET 520 and PMOS FET 522 collectively mirror source-to-drain current flowing through NMOS FET 516 to generate control signal *i_ctrl* on current control node 528.

Referring again to FIG. 1, as discussed above, voltage control circuitry 120 is configured to generate a control signal *v_ctrl* for controlling operation of DC-to-DC converter 104 to regulate a magnitude of a voltage *V_{cg}* across current generator 118 to a predetermined value. Voltage *Vᵢₙ* on converter input power node 112 is affected by charge and discharge of filter capacitor 122. In particular, voltage *Vᵢₙ* increases as filter capacitor 122 is charged by current *I_{cg}* flowing through current generator 118, and voltage *Vᵢₙ* decreases as filter capacitor 122 is discharged by current *Iᵢₙ* flowing into DC-to-DC converter 104. Additionally, voltage *V_{cg}* across current generator 118 is a function of voltage *Vᵢₙ.* Therefore, magnitude of voltage *V_{cg}* can be controlled by controlling frequency of pulses of current *Iᵢₙ* drawn by DC-to-DC converter 104 from converter input power node 112 when DC-to-DC converter 104 operates in a discontinuous conduction mode. For example, assuming that DC-to-DC converter 104 is operating in a discontinuous conduction mode and each pulse of current *Iᵢₙ* has the same on-time duration, voltage *V_{cg}* increases with increasing frequency of pulses of current *Iᵢₙ* drawn by DC-to-DC converter 104, and voltage *V_{cg}* decreases with decreasing frequency of pulses of current *Iᵢₙ* drawn by DC-to-DC converter 104.

Additionally, voltage *V_{cg}* across current generator 118 can be controlled by controlling magnitude of current *Iᵢₙ* drawn by DC-to-DC converter 104 from converter input power node 112 when DC-to-DC converter 104 operates in a continuous conduction mode. For example, assuming that DC-to-DC converter 104 is operating in a continuous conduction mode, magnitude of voltage *V_{cg}* increases with increasing magnitude of current *Iᵢₙ* drawn by DC-to-DC converter 104, and magnitude of voltage *V_{cg}* decreases with decreasing magnitude of current *Iᵢₙ* drawn by DC-to-DC converter 104.

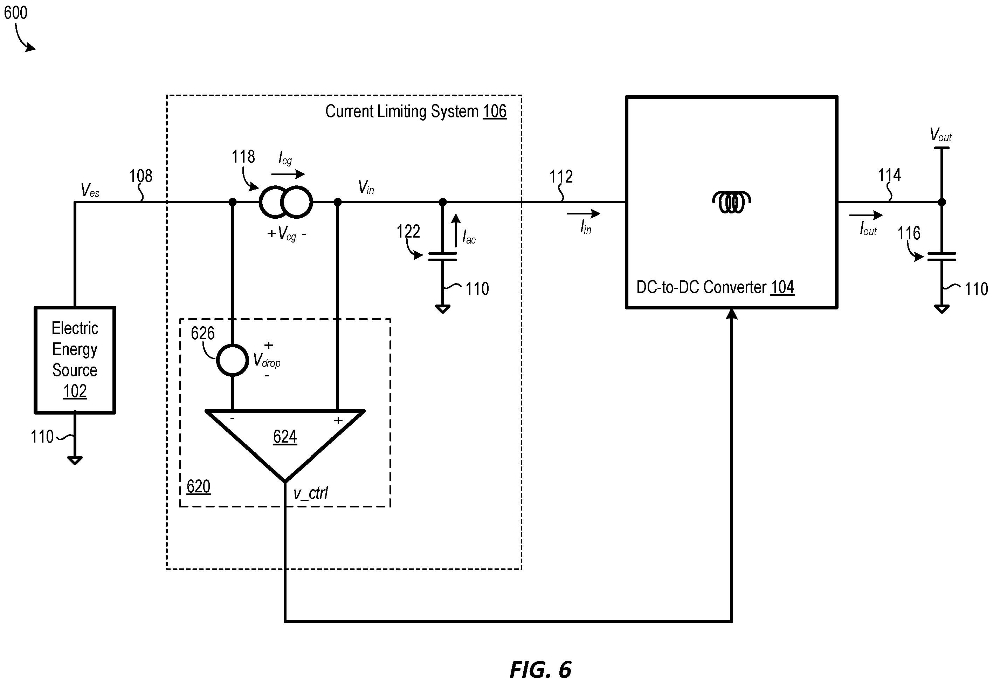

In particular embodiments, voltage control circuitry 120 is configured to generate control signal *v_ctrl* to control a frequency of pulses of current *Iᵢₙ* drawn by DC-to-DC converter 104 when DC-to-DC converter 104 is operating in a discontinuous conduction mode, to regulate a magnitude of voltage *V_{cg}.* For example, FIG. 6 is a schematic diagram of an electrical assembly 600 (FIG. 1), where voltage control circuitry 120 is embodied by voltage control circuitry 620. Voltage control circuitry 620 includes a comparator 624 and a reference voltage source 626. A non-inverting input of comparator 624 is electrically coupled to converter input power node 112, and an inverting input of comparator 624 is electrically coupled to energy source node 108 via reference voltage source 626. Reference voltage source 626 has a voltage *V_{drop},* where voltage *V_{drop}* is a desired magnitude of voltage *V_{cg}.* Comparator 624 asserts control signal *v_ctrl* in response to magnitude of voltage *V_{cg}* falling to magnitude of voltage *V_{drop},* and DC-to-DC converter 104 responds to assertion of control signal *v_ctrl* in this embodiment by drawing a pulse of current *Iᵢₙ* having a fixed on-time duration. On-time duration a pulse of current *Iᵢₙ* is a duration of a portion of the pulse where magnitude of current *Iᵢₙ* is rising, which corresponds to a time that a switching device (not shown) of DC-to-DC converter 104 operates in its on-state in response to assertion of control signal *v_ctrl.* The pulse of current *Iᵢₙ* partially discharges filter capacitor 122, thereby decreasing magnitude of voltage *Vᵢₙ* and increasing magnitude of voltage *V_{cg}.*

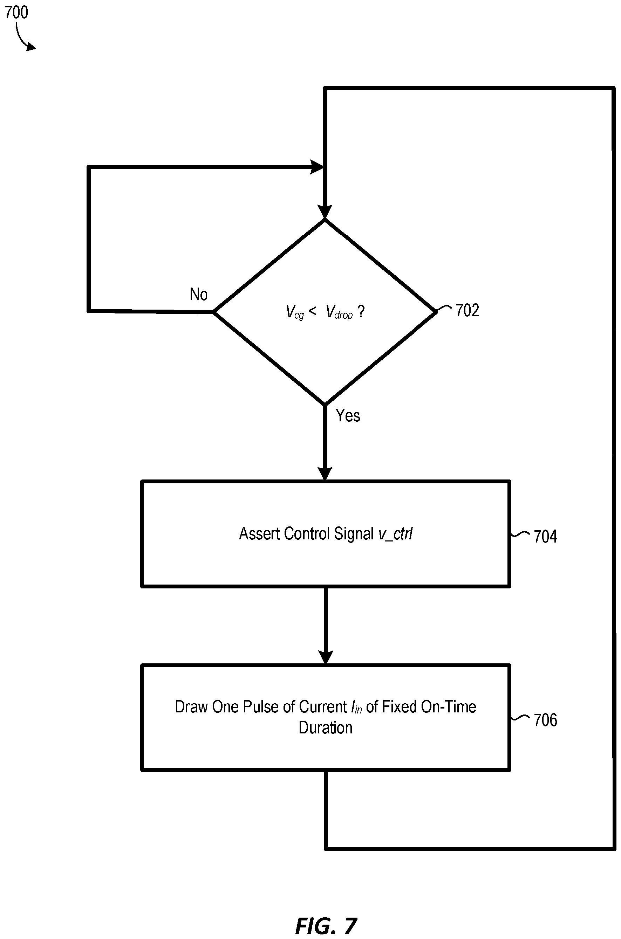

FIG. 7 is a flow chart of a method 700 for regulating voltage *V_{cg}* across current generator 118, which is one example of how voltage control circuitry 620 and DC-to-DC converter 104 may cooperate to regulate voltage *V_{cg}* when DC-to-DC converter 104 is operating in a discontinuous conduction mode. In a decision block 702, comparator 624 determines whether voltage *V_{cg}* is less than voltage *V_{drop}* by comparing voltage *V_{cg}* to voltage *V_{drop},* as discussed above with respect to FIG. 6. If the result of decision block 702 is no, method 700 repeats decision block 702. If the result of decision block 702 is yes, method 700 proceeds from decision block 702 to a block 704 where comparator 624 asserts control signal *v_ctrl* in response to voltage *V_{cg}* being less than voltage *V_{drop}.* Method 700 proceeds from block 704 to a block 706 where DC-to-DC converter 104 draws a pulse of current *Iᵢₙ* having a fixed on-time duration in response to assertion of control signal *v_ctrl.* Method 700 then returns to decision block 702 from block 706.

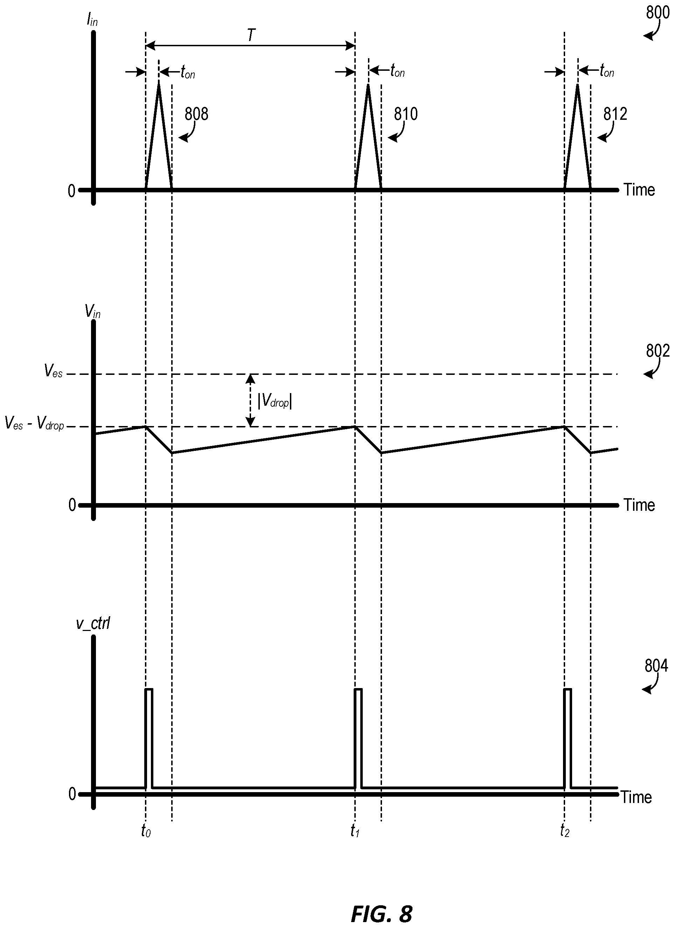

FIG. 8 includes graphs 800, 802, and 804 collectively illustrating another example of how voltage control circuitry 620 and DC-to-DC converter 104 may cooperate to regulate voltage *V_{cg}* when DC-to-DC converter 104 is operating in a discontinuous conduction mode. Graph 800 is of current *Iᵢₙ* versus time, graph 802 is of voltage *Vᵢₙ* of converter input power node 112 versus time, and graph 804 is of control signal *v_ctrl* versus time. All three of graphs 800, 802, and 804 have a common time base. As illustrated in FIG. 8, at each of time times *t₀, t₁,* and *t₂,* voltage *Vᵢₙ* rises to voltage *Vₑₛ* minus voltage *V_{drop},* which corresponds to magnitude of voltage *V_{cg}* falling to voltage *V_{drop}.* In response thereto, comparator 624 asserts control signal *v_ctrl* at each of times *t₀, t₁,* and *t₂.* Additionally, DC-to-DC converter 104 draws pulses 808, 810, and 812 of current *Iᵢₙ* in response to assertion of *v_ctrl* at times *t₀, t₁,* and *t₂,* respectively, in this embodiment. Each pulse 808, 810, and 812 has a common on-time duration *tₒₙ.* FIG. 8 illustrates operation of electrical assembly 600 under steady state conditions, such that switching period *T* of DC-to-DC converter 104 is constant. It is understood, though, that switching period will vary according to operating conditions of electrical assembly 600. For example, switching period T decreases in response to an increase in a load powered from DC-to-DC converter 104 to maintain regulation of voltage *V_{cg}.* Additionally, the shape of pulses 808, 810, and 812 may differ from what is illustrated in FIG. 8 according to the configuration and the operating mode of DC-to-DC converter 400. Furthermore, in particular embodiments, if a load powered from DC-to-DC converter 104 is sufficiently large such that switching period T would be so small that magnitude of voltage *Vᵢₙ* would be unable to reach voltage *Vₑₛ* minus voltage *V_{drop}* by the end of switching period T, DC-to-DC converter 104 transitions from an operating mode where it regulates magnitude of output voltage *Vₒᵤₜ* to an operating mode where it regulates magnitude of current *Iᵢₙ,* thereby setting switching period *T* to a value which limits the DC component of current *I_{cg}* to *I_{LIMIT}.*

Referring again to FIG. 1, in particular embodiments when DC-to-DC converter 104 operates in a continuous conduction mode, voltage control circuitry 120 is configured to generate control signal *v_ctrl* to control magnitude of current *Iᵢₙ* drawn by DC-to-DC converter 104 to regulate a magnitude of voltage *V_{cg}.* For example, in these embodiments, voltage control circuitry 120 may be configured to generate control signal *v_ctrl* as an analog or digital signal directly or indirectly specifying a magnitude of current *Iᵢₙ* to be drawn by DC-to-DC converter 104 to cause magnitude of voltage *V_{cg}* to be equal to a desired voltage *V_{drop}.* In certain of these embodiments, voltage control circuitry 120 includes error signal circuitry (not shown) configured to generate control signal *v_ctrl* as a function of a difference between magnitude of voltage *V_{cg}* and voltage *V_{drop}* so that control signal *v_ctrl* represents a change in magnitude of current *Iᵢₙ* required to cause magnitude of voltage *V_{cg}* to be equal to voltage *V_{drop}.*

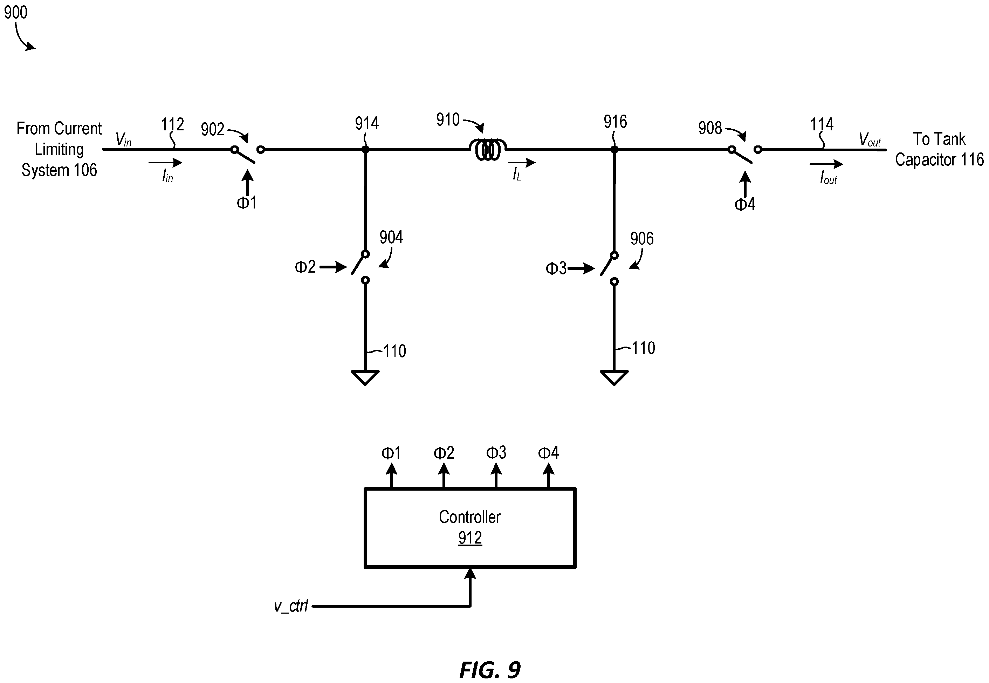

FIG. 9 is a schematic diagram of a DC-to-DC converter 900, which is one possible embodiment of DC-to-DC converter 104 (FIGS. 1, 2, and 6). DC-to-DC converter 900 includes a switching device 902, a switching device 904, a switching device 906, a switching device 908, an inductor 910, and a controller 912. Switching device 902 is electrically coupled between converter input power node 112 and a first switching node 914, and switching device 904 is electrically coupled between first switching node 914 and reference node 110. Switching device 906 is electrically coupled between a second switching node 916 and reference node 110, and switching device 908 is electrically coupled between second switching node 916 and converter output power node 114. Inductor 910 is electrically coupled between first switching node 914 and second switching node 916.

Each switching device 902, 904, 906, and 908 includes, for example, one or more transistors and associated driver circuitry. Switching device 902 is controlled by a control signal Φ1 generated by controller 912, and switching device 904 is controlled by a control signal Φ2 generated by controller 912. Switching device 906 is controlled by a control signal Φ3 generated by controller 912, and switching device 908 is controlled by a control signal Φ4 generated by controller 912. While controller 912 is depicted as being a discrete element, in some embodiments, controller 912 is partially or fully combined with one or more elements of the electrical assemblies disclosed herein. For example, in certain embodiments, controller 912 is partially or fully integrated with voltage control circuitry 120 (FIG. 1) and/or current control circuitry 304 (FIG. 3). Controller 912 is formed, for example, of analog and/or digital electronic circuitry. In some embodiments, controller 912 is at least partially embodied by a processor executing instructions, such as in the form of software and/or firmware, stored in a data store, such as in a memory.

DC-to-DC converter 900 has a buck and boost topology, and controller 912 is accordingly configured to control the switching devices of DC-to-DC converter 900, for example, to operate as either a buck converter or a boost converter. For example, in one example of a discontinuous conduction operating mode of DC-to-DC converter 900, controller 912 is configured to cause DC-to-DC converter 900 to operate as a buck converter and transfer energy from converter input power node 112 to converter output power node 114 without performing line or load regulation by (i) generating control signal Φ1 to cause switching device 902 to operate in its on-state for a fixed predetermined time duration in response to assertion of control signal *v_ctrl,* to cause flow of current *Iᵢₙ,* (ii) generating control signal Φ2 to cause switching device 904 to operate in its on-state when switching device 902 is in its off-state and magnitude of a current *I_{L}* flowing through inductor 910 is greater than zero, (iii) generating control signal Φ3 to cause switching device 906 to continuously operate in its off-state, and (iv) generating control signal Φ4 to cause switching device 908 to continuously operate in its on-state. In this document, a switching device is in its on-state when the switching device is being controlled to operate in its conductive state. Conversely, a switching device is in it-off state when the switching device is being controlled to operate in its non-conductive state. As another example of a discontinuous conduction operating mode of DC-to-DC converter 900, controller 912 is configured to cause DC-to-DC converter 900 to operate as a boost converter and transfer energy from converter input power node 112 to converter output power node 114 without performing line or load regulation by (i) generating control signal Φ3 to cause switching device 906 to operate in its on-state for a fixed predetermined time duration in response to assertion of control signal *v_ctrl,* to cause flow of current *Iᵢₙ,* (ii) generating control signal Φ4 to cause switching device 908 to operate in its on-state when switching device 906 is in its off-state and magnitude of a current *I_{L}* flowing through inductor 910 is greater than zero, (iii) generating control signal Φ1 to cause switching device 902 to continuously operate in its on-state, and (iv) generating control signal Φ2 to cause switching device 904 to continuously operate in its off-state.

As an additional example of a discontinuous conduction operating mode of DC-to-DC converter 900, controller 912 is configured to cause DC-to-DC converter 900 to operate as a seamless buck-boost converter and transfer energy from converter input power node 112 to converter output power node 114 without performing line or load regulation by generating control signals Φ1, Φ2, Φ3, and Φ4 to cause DC-to-DC converter 900 to repeatedly operate in the following sequence: phase 1, phase 2, phase 3, and phase 4. Phase 1 is characterized by (i) each of switching device 902 and 906 operating in its respective on-state and (ii) each of switching device 904 and 908 operating in its respective off-state, for a fixed predetermined time duration in response to assertion of control signal *v_ctrl,* to cause flow of current *Iᵢₙ.* Phase 2 is characterized by (i) each of switching device 902 and 908 operating in its respective on-state and (ii) each of switching device 904 and 906 operating in its respective off-state. Phase 3 is characterized by (i) each of switching device 904 and 908 operating in its respective on-state and (ii) each of switching device 902 and 906 operating in its respective off-state. Phase 4 is characterized by (i) each of switching device 902 and 908 operating in its respective off-state and (ii) each of switching device 904 and 906 operating in its respective on-state. Phase 4 is a freewheeling phase that could be omitted if DC-to-DC converter 900 were operating in a continuous conduction mode (CCM) instead of in the discontinuous conduction mode.

As a further example of a discontinuous conduction operating mode of DC-to-DC converter 900, controller 912 is configured to cause DC-to-DC converter 900 to operate as a non-inverting buck-boost converter and transfer energy from converter input power node 112 to converter output power node 114 without performing line or load regulation by generating control signals Φ1, Φ2, Φ3, and Φ4 to cause DC-to-DC converter 900 to repeatedly operate in the following sequence: phase 1 and phase 2. Phase 1 is characterized by (i) each of switching device 902 and 906 operating in its respective on-state and (ii) each of switching device 904 and 908 operating in its respective off-state, for a fixed predetermined time duration in response to assertion of control signal *v_ctrl,* to cause flow of current *Iᵢₙ.* Phase 2 is characterized by (i) each of switching device 904 and 908 operating in its respective on-state and (ii) each of switching device 902 and 906 operating in its respective off-state.

Additionally, in certain embodiments, when DC-to-DC converter 900 operates in a continuous conduction mode, controller 912 is configured to cause DC-to-DC converter 900 to generate control signals Φ1, Φ2, Φ3, and Φ4 to cause DC-to-DC converter 900 to regulate magnitude of current *Iᵢₙ* according to control signal *v_ctrl* and thereby regulate magnitude of voltage *V_{cg}* across current generator 118, such as by using a peak current mode control technique or a valley current mode control technique. For instance, controller 912 could be configured to operate as a buck converter, a boost converter, a seamless buck-boost converter, or a non-inverting buck-boost converter in a manner similar to that discussed above with respect to discontinuous conduction mode operation but instead operating in a continuous conduction mode to regulate magnitude of current *Iᵢₙ* in response to control signal *v_ctrl.*

Furthermore, in certain embodiments, DC-to-DC converter 900 is capable of operating in or more modes where it performs line and load regulation in addition to transferring energy from converter input power node 112 to converter output power node 114, such as when current limiting system 106 is disabled. For example, in some embodiments, controller 912 is configured to cause DC-to-DC converter 900 to perform line and load regulation by modifying one of the abovementioned operating modes to modulate pulse width or switching frequency of one or more switching devices, as required to achieve a desired voltage magnitude (e.g., magnitude of *Vₒᵤₜ* or *Vᵢₙ*) or a desired current magnitude (e.g., magnitude of *Iₒᵤₜ* or *Iᵢₙ*).

Moreover, DC-to-DC converter 900 could be configured to operate in manners other than those discussed above. Additionally, DC-to-DC converter 900 could be modified to have a different topology. For example, each of switching device 902 and switching device 904 could be omitted so that DC-to-DC converter 900 is a boost converter. As another example, each of switching device 906 and switching device 908 could be omitted such that DC-to-DC converter 900 is a buck converter.

Referring again to FIG. 1, voltage *Vᵢₙ* on converter input power node 112 will rise to voltage *Vₑₛ* on energy source node 108 if DC-to-DC converter 104 is not powering a significant load, causing voltage *V_{cg}* to be zero or close to zero. Low values of voltage *V_{cg}* may be problematic in some embodiments. For example, in embodiments where current generator 118 is embodied as current generator 300 of FIG. 3, a low value of voltage *V_{cg}* will cause current generator 300 to enter a clipping mode with power transistor 302 entering into a deep triode mode. Current generator 300 may undesirably allow magnitude of current *I_{cg}* to overshoot once DC-to-DC converter 104 resumes powering a load due to limited slew rate of source-to-gate voltage of power transistor 302. Additionally, current generator 300 will consume current even if magnitude of current *I_{cg}* is zero, resulting in power loss. Therefore, some alternate embodiments of current limiting system 106 further include features for disabling and bypassing current generator 118 when magnitude of voltage *V_{cg}* is below a minimum threshold value.

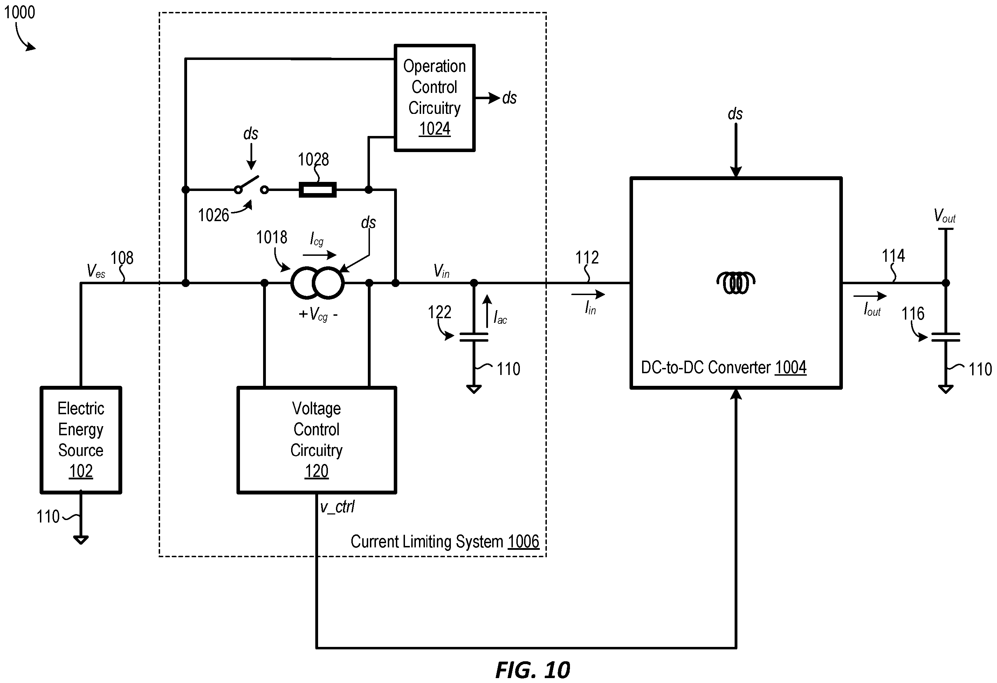

For example, FIG. 10 is a schematic diagram of an electrical assembly 1000, which is an alternate embodiment of electrical assembly 100 (FIG. 1) where (i) current limiting system 106 is replaced with a current limiting system 1006 and (ii) DC-to-DC converter 104 is replaced with a DC-to-DC converter 1004. Current limiting system 1006 differs from current limiting system 106 in that current limiting system 1006 further includes operation control circuitry 1024, a switching device 1026, and a resistor 1028. Current limiting system 1006 additionally includes a current generator 1018 in place of current generator 118. Switching device 1026 and resistor 1028 are electrically coupled in series between energy source node 108 and converter input power node 112, and switching device 1026 is controlled by a signal *ds* generated by operation control circuitry 1024. Switching device 1026 operates in its off-state when signal *ds* is de-asserted, and switching device 1026 operates in its on-state when signal *ds* is asserted. Current generator 1018 is similar to current generator 118 (FIG. 1), except that current generator 1018 is further capable of being disabled by signal *ds.* Specifically, current generator 1018 operates as discussed above with respect to FIG. 1 when signal *ds* is de-asserted, and current generator 1018 is disabled when signal *ds* is asserted. In particular embodiments, current generator 1018 includes soft start circuitry (not shown) to prevent overshoot of magnitude of current *I_{cg}* when current generator 1018 resumes operation in response to de-assertion of signal *ds.*

Operation control circuitry 1024 is configured to monitor voltage *V_{cg}* and assert signal *ds* in response to magnitude of voltage *V_{cg}* falling to a predetermined minimum threshold value *V_{th_min}.* As such, operation control circuitry 1024 causes (i) current generator 1018 to be disabled and (ii) current generator 1018 to be bypassed by switching device 1026 and resistor 1028, in response to magnitude of voltage *V_{cg}* falling to predetermined minimum threshold value *V_{th_min}.* DC-to-DC converter 1004 also receives signal *ds* as an input. DC-to-DC converter 1004 is like DC-to-DC converter 104 (FIG. 1), but DC-to-DC converter 1004 is further configured to change its operating mode, e.g., to disregard assertion of control signal *v_ctrl* and instead operate in a mode where it performs line and load regulation, when signal *ds* is asserted. While operation control circuitry 1024 is depicted as being a discrete element, operation control circuitry 1024 could be partially or fully combined with one or more other elements. For example, in some embodiments, operation control circuitry 1024 is combined with voltage control circuitry 120 and/or a controller of DC-to-DC converter 1004.

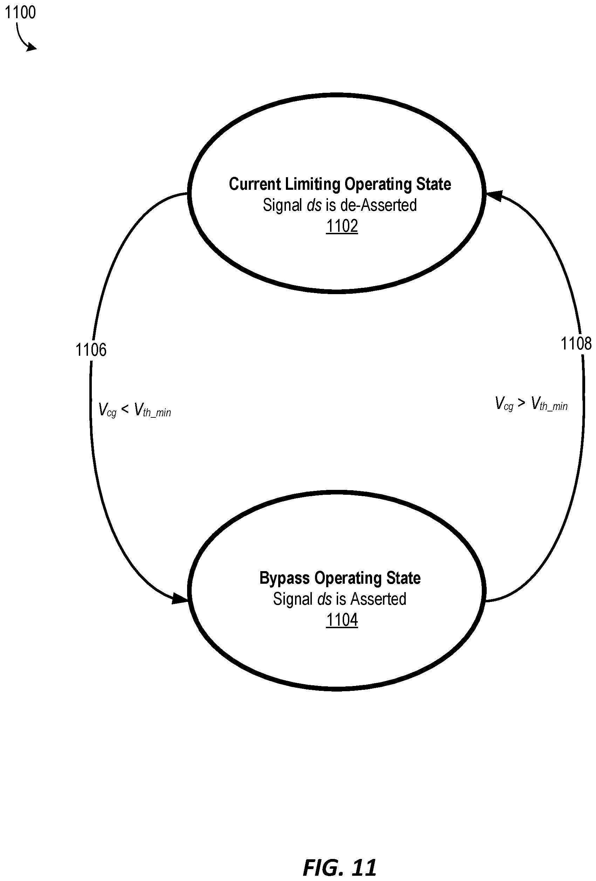

FIG. 11 is a state diagram 1100 illustrating two possible operating states of electrical assembly 1000 (FIG. 10). It is understood, though, that electrical assembly 1000 is not limited to operating according to the operating states of state diagram 1100.

State diagram 1100 includes a current limiting operating state 1102 and a bypass operating state 1104. Current limiting operating state 1102 is characterized by signal *ds* being de-asserted. As such, in current limiting operating state 1102, current generator 1018 limits magnitude of current *I_{cg}* to *I_{LIMIT},* and voltage control circuitry 120 cooperates with DC-to-DC converter 1004 to regulate magnitude of voltage *V_{cg}* to a predetermined value. Bypass operating state 1104 is characterized by signal *ds* being asserted. As such, in bypass operating state 1104, current generator 1018 is disabled, current generator 1018 is bypassed by switching device 1026 and resistor 1028, and DC-to-DC converter 1004 operates in a mode where it disregards assertion of control signal *v_ctrl,* e.g., DC-to-DC converter 1004 may operate in a mode where it performs line and load regulation. Electrical assembly 1000 transitions 1106 from current limiting operating state 1102 to bypass operating state 1104 in response to voltage *V_{cg}* dropping below predetermined minimum threshold value *V_{th_min},* and electrical assembly 1000 transitions 1108 from bypass operating state 1104 to current limiting operating state 1102 in response to voltage *V_{cg}* rising above predetermined minimum threshold value *V_{th_min}.*

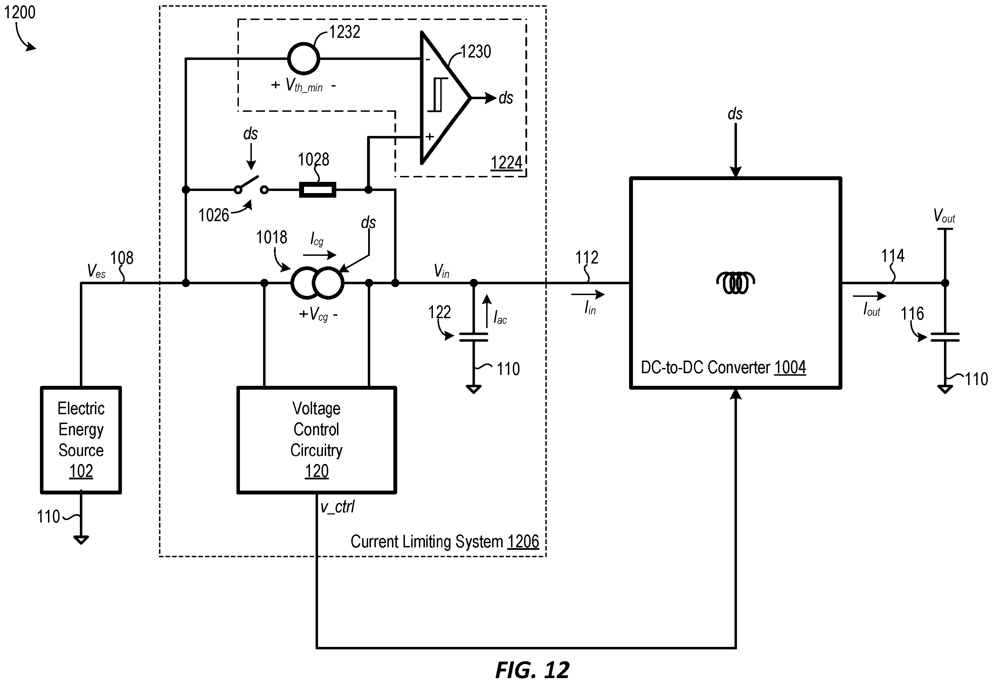

FIG. 12 is a schematic diagram of an electrical assembly 1200, which is an embodiment of electrical assembly 1000 (FIG. 10) where operation control circuitry 1024 is embodiment by operation control circuitry 1224 including a comparator 1230 and a reference voltage source 1232. Reference voltage source 1232 has a voltage equal to predetermined minimum threshold value *V_{th_min},* and reference voltage source 1232 is electrically coupled between energy source node 108 and an inverting input of comparator 1230. A non-inverting input of comparator 1230 is electrically coupled to converter input power node 112. Comparator 1230 generates signal *ds* on its output. Some embodiments of comparator 1230 exhibit hysteresis, as illustrated in FIG. 12.

### Combinations of Features

Features described above may be combined in various ways without departing from the scope hereof. The following examples illustrate some possible combinations.

(A1) A current limiting system for a direct-current-to-direct-current (DC-to-DC) converter includes a current generator, voltage control circuitry, and a filter capacitor. The current generator is electrically coupled between an energy source node and a converter input power node, where (i) the energy source node is for electrically coupling the current limiting system to an electric energy source and (ii) the converter input power node is for electrically coupling the current limiting system to the DC-to-DC converter. The current generator is configured to limit a magnitude of a direct current (DC) component of current flowing through the current generator to a predetermined maximum value and to attenuate one or more alternating current (AC) components of current flowing through the current generator. The voltage control circuitry is electrically coupled to the current generator and is configured to generate a control signal for controlling operation of the DC-to-DC converter to regulate a magnitude of a voltage across the current generator. The filter capacitor is electrically coupled between the converter input power node and a reference node.

(A2) In the current limiting system denoted as (A1), the voltage control circuitry may be further configured to control operation of the DC-to-DC converter to regulate the magnitude of the voltage across the current generator to a predetermined value.

(A3) In either one of the current limiting systems denoted as (A1) or (A2), the voltage control circuitry may include (i) a reference voltage source and (ii) a comparator configured to assert the control signal in response to the magnitude of the voltage across the current generator falling to a magnitude of a voltage of the reference voltage source.

(A4) In any one of the current limiting systems denoted as (A1) through (A3), the current generator may include (i) a power transistor electrically coupled between the energy source node and the converter input power node and (ii) current control circuitry configured to control the power transistor such that the magnitude of the DC component of the current flowing through the power transistor is limited to the predetermined maximum value.

(A5) In the current limiting system denoted as (A4), the current control circuitry may implement closed-loop control of the power transistor.

(A6) Any one of the current limiting systems denoted as (A1) through (A5) may further include operation control circuitry configured to disable the current generator in response to the magnitude of the voltage across the current generator falling to a predetermined minimum threshold value.

(A7) The current limiting system denoted as (A6) may further include a switching device and a resistor electrically coupled in series between the energy source node and the converter input power node, and the operation control circuitry may be further configured to cause the switching device to operate in its on-state in response to the magnitude of the voltage across the current generator falling to the predetermined minimum threshold value.

(B1) An electrical assembly includes (i) an electric energy source electrically coupled to an energy source node, (ii) a direct-current-to-direct-current (DC-to-DC) converter electrically coupled between a converter input power node and a converter output power node, and (iii) a current limiting system. The current limiting system includes a current generator, voltage control circuitry, and a filter capacitor. The current generator is electrically coupled between the energy source node and the converter input power node, and the current generator is configured to limit a magnitude of a direct current (DC) component of current flowing through the current generator to a predetermined maximum value and to attenuate one or more alternating current (AC) components of current flowing through the current generator. The voltage control circuitry is electrically coupled to the current generator and is configured to generate a control signal for controlling operation of the DC-to-DC converter to regulate a magnitude of a voltage across the current generator. The filter capacitor is electrically coupled between the converter input power node and a reference node.

(B2) In the electrical assembly denoted as (B1), the electric energy source may include a battery.

(B3) Either one of the electrical assemblies denoted as (B1) or (B2) may further include a tank capacitor electrically coupled to the converter output power node of the DC-to-DC converter.

(B4) In any one of the electrical assemblies denoted as (B1) through (B3), the voltage control circuitry may be further configured to control operation of the DC-to-DC converter to regulate the magnitude of the voltage across the current generator to a predetermined value.

(B5) In any one of the electrical assemblies denoted as (B1) through (B4), the voltage control circuitry may include (i) a reference voltage source and (ii) a comparator configured to assert the control signal in response to the magnitude of the voltage across the current generator falling to a magnitude of a voltage of the reference voltage source.

(B6) In any one of the electrical assemblies denoted as (B1) through (B5), the current generator may include (i) a power transistor electrically coupled between the energy source node and the converter input power node and (ii) current control circuitry configured to control the power transistor such that the magnitude of the DC component of the current flowing through the power transistor is limited to the predetermined maximum value.

(B7) In the electrical assembly denoted as (B6), the current control circuitry may implement closed-loop control of the power transistor.

(B8) In any one of the electrical assemblies denoted as (B1) through (B7), the current limiting system may further include operation control circuitry configured to disable the current generator in response to the magnitude of voltage across the current generator falling to a predetermined minimum threshold value.

(B9) In any one of the electrical assemblies denoted as (B1) through (B8), the DC-to-DC converter may be configured to respond to assertion of the control signal by causing a switching device of the DC-to-DC converter to operate in its on-state for fixed predetermined time duration such that an electric current flows through the current generator of the current limiting system.

(B10) In any one of the electrical assemblies denoted as (B1) through (B9), the DC-to-DC converter may have a buck and boost topology.

(C1) A method for limiting magnitude of current flowing from an electric energy source to a direct-current-to-direct-current (DC-to-DC) converter includes (i) controlling a current generator to limit magnitude of a direct current (DC) component of a current flowing from the electric energy source to the DC-to-DC converter to a predetermined maximum value and (ii) controlling operation of the DC-to-DC converter to regulate a magnitude of a voltage across the current generator.

(C2) In the method denoted as (C1), controlling the operation of the DC-to-DC converter to regulate the magnitude of the voltage across the current generator may include controlling the operation of the DC-to-DC converter to regulate the magnitude of the voltage across the current generator to a predetermined value.

(C3) In either one of the methods denoted as (C1) and (C2), controlling the operation of the DC-to-DC converter to regulate the magnitude of the voltage across the current generator may include causing at least one switching device of the DC-to-DC converter to operate in its on-state for fixed predetermined time duration, in response to the magnitude of the voltage across the current generator falling to a magnitude of a voltage of a reference voltage source.

Changes may be made in the above methods, devices, and systems without departing from the scope hereof. It should thus be noted that the matter contained in the above description and shown in the accompanying drawings should be interpreted as illustrative and not in a limiting sense. The following claims are intended to cover generic and specific features described herein, as well as all statements of the scope of the present method and system, which as a matter of language, might be said to fall therebetween.

### ASPECTS OF THE DISCLOSURE

Non-limiting aspects of the disclosure are set out in the following numbered clauses:
1. A current limiting system for a direct-current-to-direct-current (DC-to-DC) converter, comprising:
   a current generator electrically coupled between an energy source node and a converter input power node, the energy source node being for electrically coupling the current limiting system to an electric energy source, the converter input power node being for electrically coupling the current limiting system to the DC-to-DC converter, the current generator being configured to limit a magnitude of a direct current (DC) component of current flowing through the current generator to a predetermined maximum value and to attenuate one or more alternating current (AC) components of current flowing through the current generator;
   voltage control circuitry electrically coupled to the current generator and configured to generate a control signal for controlling operation of the DC-to-DC converter to regulate a magnitude of a voltage across the current generator; and
   a filter capacitor electrically coupled between the converter input power node and a reference node.
2. The current limiting system of clause 1, wherein the voltage control circuitry is further configured to control operation of the DC-to-DC converter to regulate the magnitude of the voltage across the current generator to a predetermined value.
3. The current limiting system of any preceding clause, wherein the voltage control circuitry comprises:
   a reference voltage source; and
   a comparator configured to assert the control signal in response to the magnitude of the voltage across the current generator falling to a magnitude of a voltage of the reference voltage source.
4. The current limiting system of any preceding clause, wherein the current generator comprises:
   a power transistor electrically coupled between the energy source node and the converter input power node; and
   current control circuitry configured to control the power transistor such that the magnitude of the DC component of the current flowing through the power transistor is limited to the predetermined maximum value.
5. The current limiting system of clause 4, wherein the current control circuitry implements closed-loop control of the power transistor.
6. The current limiting system of any preceding clause, further comprising operation control circuitry configured to disable the current generator in response to the magnitude of the voltage across the current generator falling to a predetermined minimum threshold value.
7. The current limiting system of clause 6, further comprising a switching device and a resistor electrically coupled in series between the energy source node and the converter input power node, the operation control circuitry being further configured to cause the switching device to operate in its on-state in response to the magnitude of the voltage across the current generator falling to the predetermined minimum threshold value.
8. An electrical assembly, comprising:
   an electric energy source electrically coupled to an energy source node;
   a direct-current-to-direct-current (DC-to-DC) converter electrically coupled between a converter input power node and a converter output power node; and
   a current limiting system including:
      a current generator electrically coupled between the energy source node and the converter input power node, the current generator being configured to limit a magnitude of a direct current (DC) component of current flowing through the current generator to a predetermined maximum value and to attenuate one or more alternating current (AC) components of current flowing through the current generator,
      voltage control circuitry electrically coupled to the current generator and configured to generate a control signal for controlling operation of the DC-to-DC converter to regulate a magnitude of a voltage across the current generator, and
      a filter capacitor electrically coupled between the converter input power node and a reference node.
9. The electrical assembly of clause 8, wherein the electric energy source comprises a battery.
10. The electrical assembly of clause 8 or clause 9, further comprising a tank capacitor electrically coupled to the converter output power node of the DC-to-DC converter.
11. The electrical assembly of any of clauses 8 to 10, wherein the voltage control circuitry is further configured to control operation of the DC-to-DC converter to regulate the magnitude of the voltage across the current generator to a predetermined value.
12. The electrical assembly of any of clauses 8 to 11, wherein the voltage control circuitry comprises:
   a reference voltage source; and
   a comparator configured to assert the control signal in response to the magnitude of the voltage across the current generator falling to a magnitude of a voltage of the reference voltage source.
13. The electrical assembly of any of clauses 8 to 12, wherein the current generator comprises:
   a power transistor electrically coupled between the energy source node and the converter input power node; and
   current control circuitry configured to control the power transistor such that the magnitude of the DC component of the current flowing through the power transistor is limited to the predetermined maximum value.
14. The electrical assembly of clause 13, wherein the current control circuitry implements closed-loop control of the power transistor.
15. The electrical assembly of any of clauses 8 to 14, wherein the current limiting system further includes operation control circuitry configured to disable the current generator in response to the magnitude of voltage across the current generator falling to a predetermined minimum threshold value.
16. The electrical assembly of any of clauses 8 to 15, wherein the DC-to-DC converter is configured to respond to assertion of the control signal by causing a switching device of the DC-to-DC converter to operate in its on-state for fixed predetermined time duration such that an electric current flows through the current generator of the current limiting system.
17. The electrical assembly of any of clauses 8 to 16, wherein the DC-to-DC converter has a buck and boost topology.
18. A method for limiting magnitude of current flowing from an electric energy source to a direct-current-to-direct-current (DC-to-DC) converter, the method comprising:
   controlling a current generator to limit magnitude of a direct current (DC) component of a current flowing from the electric energy source to the DC-to-DC converter to a predetermined maximum value; and
   controlling operation of the DC-to-DC converter to regulate a magnitude of a voltage across the current generator.
19. The method of clause 18, wherein controlling the operation of the DC-to-DC converter to regulate the magnitude of the voltage across the current generator comprises controlling the operation of the DC-to-DC converter to regulate the magnitude of the voltage across the current generator to a predetermined value.
20. The method of clause 18 or clause 19, wherein controlling the operation of the DC-to-DC converter to regulate the magnitude of the voltage across the current generator comprises causing at least one switching device of the DC-to-DC converter to operate in its on-state for fixed predetermined time duration, in response to the magnitude of the voltage across the current generator falling to a magnitude of a voltage of a reference voltage source.

## Claims

1. A current limiting system for a direct-current-to-direct-current (DC-to-DC) converter, comprising:
a current generator electrically coupled between an energy source node and a converter input power node, the energy source node being for electrically coupling the current limiting system to an electric energy source, the converter input power node being for electrically coupling the current limiting system to the DC-to-DC converter, the current generator being configured to limit a magnitude of a direct current (DC) component of current flowing through the current generator to a predetermined maximum value and to attenuate one or more alternating current (AC) components of current flowing through the current generator;
voltage control circuitry electrically coupled to the current generator and configured to generate a control signal for controlling operation of the DC-to-DC converter to regulate a magnitude of a voltage across the current generator; and
a filter capacitor electrically coupled between the converter input power node and a reference node.

2. The current limiting system of claim 1, wherein the voltage control circuitry is further configured to control operation of the DC-to-DC converter to regulate the magnitude of the voltage across the current generator to a predetermined value.

3. The current limiting system of any preceding claim, wherein the voltage control circuitry comprises:
a reference voltage source; and
a comparator configured to assert the control signal in response to the magnitude of the voltage across the current generator falling to a magnitude of a voltage of the reference voltage source.

4. The current limiting system of any preceding claim, wherein the current generator comprises:
a power transistor electrically coupled between the energy source node and the converter input power node; and
current control circuitry configured to control the power transistor such that the magnitude of the DC component of the current flowing through the power transistor is limited to the predetermined maximum value.

5. The current limiting system of claim 4, wherein the current control circuitry implements closed-loop control of the power transistor.

6. The current limiting system of any preceding claim, further comprising operation control circuitry configured to disable the current generator in response to the magnitude of the voltage across the current generator falling to a predetermined minimum threshold value.

7. The current limiting system of claim 6, further comprising a switching device and a resistor electrically coupled in series between the energy source node and the converter input power node, the operation control circuitry being further configured to cause the switching device to operate in its on-state in response to the magnitude of the voltage across the current generator falling to the predetermined minimum threshold value.

8. An electrical assembly, comprising:
an electric energy source electrically coupled to an energy source node;
the direct-current-to-direct-current (DC-to-DC) converter of any preceding claim, electrically coupled between a converter input power node and a converter output power node.

9. The electrical assembly of claim 8, wherein the electric energy source comprises a battery.

10. The electrical assembly of claim 8 or claim 9, further comprising a tank capacitor electrically coupled to the converter output power node of the DC-to-DC converter.

11. The electrical assembly of any of claims 8 to 10, wherein the DC-to-DC converter is configured to respond to assertion of the control signal by causing a switching device of the DC-to-DC converter to operate in its on-state for fixed predetermined time duration such that an electric current flows through the current generator of the current limiting system.

12. The electrical assembly of any of claims 8 to 11, wherein the DC-to-DC converter has a buck and boost topology.

13. A method for limiting magnitude of current flowing from an electric energy source to a direct-current-to-direct-current (DC-to-DC) converter, the method comprising:
controlling a current generator to limit magnitude of a direct current (DC) component of a current flowing from the electric energy source to the DC-to-DC converter to a predetermined maximum value; and
controlling operation of the DC-to-DC converter to regulate a magnitude of a voltage across the current generator.

14. The method of claim 13, wherein controlling the operation of the DC-to-DC converter to regulate the magnitude of the voltage across the current generator comprises controlling the operation of the DC-to-DC converter to regulate the magnitude of the voltage across the current generator to a predetermined value.

15. The method of claim 13 or claim 14, wherein controlling the operation of the DC-to-DC converter to regulate the magnitude of the voltage across the current generator comprises causing at least one switching device of the DC-to-DC converter to operate in its on-state for fixed predetermined time duration, in response to the magnitude of the voltage across the current generator falling to a magnitude of a voltage of a reference voltage source.
